# EUROPÄISCHE PATENTSCHRIFT

(11) **EP 1 056 954 B1**
(45) Veröffentlichungstag und Bekanntmachung des Hinweises auf die Patenterteilung: **22.10.2003**
(21) Anmeldenummer: 99913186.5
(22) Anmeldetag: 24.02.1999
(51) Int. Cl.: F16C 19/52, F16C 17/24, F16C 33/26, F16C 33/34, F03D 11/00, F16C 19/34, F16C 17/18

(54) **MITTENFREIE DREHVERBINDUNG**
ROTATIONAL JOINT WITHOUT A CENTER
JOINT TOURNANT SANS CENTRE

(30) Priorität: 27.02.1998 DE 19808386
(43) Veröffentlichungstag der Anmeldung: 06.12.2000
(73) Patentinhaber: Dre/con Grosswälzlager GmbH, 16225 Eberswalde (DE)
(72) Erfinder: SINNER, Karl-Helmut, D-44267 Dortmund (DE)
(74) Vertreter: Leske, Thomas, Dr.
(86) Internationale Anmeldenummer: EP9901184
(87) Internationale Veröffentlichungsnummer: WO99043962

(56) Entgegenhaltungen:
- EP-A- 0 272 892
- EP-A- 0 426 279
- DE-A- 3 725 972
- FR-A- 605 095
- US-A- 3 920 293
- US-A- 5 332 072

## Beschreibung

Die Erfindung betrifft eine mittenfreie Drehverbindung für die Lagerung von Anwendungsfällen, die einen definierten Drehwiderstand und/oder eine gute Dämpfung erfordern, nach dem Oberbegriff des Anspruchs 1.

Bei Windkraftanlagen z.B. wird die Gondel über eine mittenfreie Drehverbindung durch einen Antrieb gegenüber dem Turm gedreht. Der Rotor kann so den wechselnden Windrichtungen nachgeführt werden. Es ist unwirtschaftlich, eine infolge von Schwingungen und Trägheitskräften hin- und herschlagende Gondel durch einen oder mehrere Antriebe und eine entsprechend dimensionierte Verzahnung an der Drehverbindung, zu fixieren. Deshalb wird unterhalb der Drehverbindung ein separates Bremssystem, mit Bremsscheibe und Bremsbacken, vorgesehen. (Teubner Studienbücher, R. Gasch, Windkraftanlagen, Seite 71, Ausgabe 1991). Bei Änderung der Windrichtung wird heute, über meist mehrere Antriebe, die Gondel, gegen das permanente Reibmoment des Bremssystems, in die neue Stellung geschwenkt.

Da die Bremsbacken oft nicht gleichmäßig auf dem Umfang verteilt werden können und auch die Bremsbacken untereinander unterschiedliche Reibkräfte erzeugen, resultieren daraus für die Drehverbindung erhebliche, zusätzliche Belastungen.

In US-A-3,920,293 ist ein Gleitlager beschrieben, bei welchem zur Reduzierung der Reibung zwischen den gegeneinander bewegten Bauteile zwischen einem äußeren Laufring und einem inneren Laufring ein Zwischenelement vorgesehen, welches aus Kunststoff ausgebildet ist und sich gleitend im Zwischenraum zwischen den Laufringen bewegt, wobei das Zwischenelement aus kleinen zylindrischen oder kugelförmigen miteinander verbundenen Elementen besteht. Das Zwischenelement ist so bemessen, daß sein Außendurchmesser gleich oder geringfügig kleiner als der Innendurchmesser des äußeren Laufringes ist und sein Innendurchmesser gleich oder geringfügig größer als der Außendurchmesser des inneren Laufringes ist, so daß das Zwischenelement etwas lose im Zwischenraum zwischen den Laufringen angeordnet ist.

In EP 0 426 279 A2 ist ein Wälzlager beschrieben, dessen Wälzkörper hohl ausgebildet sind, wobei die Wälzkörper zwischen dem inneren und dem äußeren Laufring relativ lose angeordnet sind. Beim Aufpressen des Lagers auf eine Welle oder ähnliches mittels einer leichten Übergangs- oder Preßpassung wird eine Vorspannung des Lagers in Folge der sich ergebenden Ausdehnung des inneren Laufringes erreicht. Die Anpreßkräfte in Folge der Vorspannung sind dabei so ausgelegt, daß ein Schmierölfilm auf den Laufflächen verbleibt.

In DE 37 25 972 A1 ist eine gattungsgemäße Wälzlager-Drehverbindung beschrieben, bei welcher zusätzlich ein Bremssystem, welches aus einer Bremsfläche und einen damit im Eingriff befindlichen Bremsbelag besteht. Die Wälzkörper in Form von Kugeln rollen in üblicher Weise am inneren und am äußeren Laufring ab. Die Bremseinrichtung kann ggf. als die Axialkräfte aufnehmendes Gleitlager wirken.

Der Erfindung liegt die Aufgabe zugrunde, in die bekannte Wälzlagerdrehverbindung ein Brems- und Dämpfungssystem zu integrieren, bei dem die Laufbahn der Drehverbindung keine zusätzlichen Kräfte aus dem Bremssystem übertragen muß und bei dem wegen der besseren Dämpfung von Schwingungen die Gefahr der Riffelbildung in der Laufbahn und die Geräuschbildung in der Umgebung stark reduziert sind.

Diese Aufgabe wird erfindungsgemäß durch das kennzeichnende Merkmal des Anspruchs 1 gelöst. Vorteilhafte Aus- und Weiterbildungen sind in den abhängigen Ansprüchen beschrieben.

Die mit der. Erfindung erzielten Vorteile bestehen insbesondere darin, daß bei gleichmäßig verteilter Anordnung der Spannhülsen die Laufbahn der Drehverbindung keine aus dem Bremssystem resultierenden Kräfte übertragen muß,
daß Schwingungen gedämpft werden,
daß bei der Montage der Anlage keine Justierarbeiten und während des Betriebes keine Wartungsarbeiten anfallen,
daß die Kosten durch Reduzierung des Bauraumes und durch Verwendung von standardisierten und genormten Teilen erheblich gesenkt werden können,
daß jedes in existierenden Windkraftanlagen geforderte Reibmoment realisierbar ist.

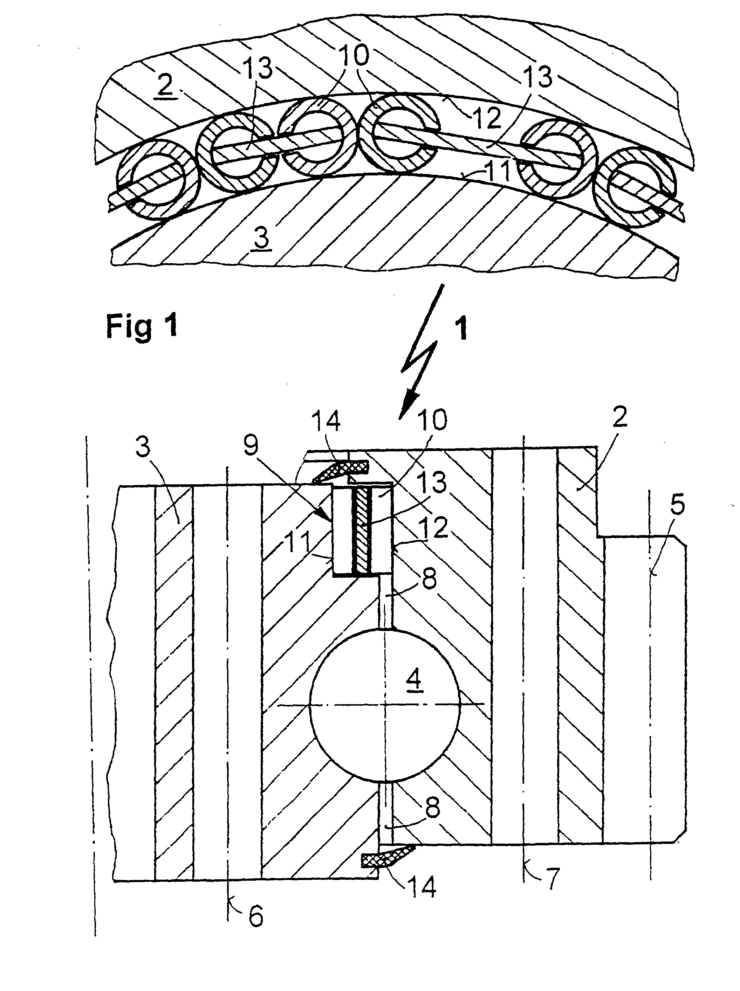

Ein Ausführungsbeispiel der Erfindung ist in der Zeichnung dargestellt und wird im folgenden näher beschrieben. Es zeigen
- Fig. 1: einen Schnitt durch eine Hälfte einer Drehverbindung mit einem Bremssystem auf einer Seite von der Kugellaufbahn und eine vergrößerte Darstellung des Bremssystems im Schnitt,
- Fig. 2: einen Schnitt durch eine Hälfte einer Drehverbindung, die als Gleitlager ausgebildet ist, und eine vergrößerte Darstellung des Bremssystems mit gekreuzter Anordnung der Spannhülsen.

Die Drehverbindung 1 besteht aus einem Außenring 2 und einem Innenring 3, welche drehbar über Kugeln 4 als Wälzkörper oder gekreuzt angeordneten Hülsen 10 als Gleitkörper miteinander verbunden sind. Der Außenring besitzt eine Verzahnung 5, in die ein nicht dargestelltes Ritzel eines Drehantriebes eingreift. Über Befestigungsbohrungen 6, 7 ist die nicht dargestellte Anschlußkonstruktion mit der Drehverbindung 1 verbunden.

Zwischen den Lagerringen 2, 3 befindet sich ein Lagerspalt 8. In diesem Lagerspalt 8 ist auf einer oder wahlweise auf beiden Seiten des Wälzkörpers 4 eine Ausnehmung 9 zur Aufnahme der Spannhülsen 10. Der durch die Ausnehmung 9 geschaffene Raum für die Hülsen 10 ist durch die vorzugswelse gehärteten Kontaktflächen 11 und 12 radial begrenzt. Die Spannhülsen 10 werden in axialer Richtung in den Raum der Ausnehmung 9 gepreßt und mit Hilfe der Distanzhalter 13 in benötigter Anzahl verteilt und fixiert. Die Durchmesser der Kontaktflächen 11 und 12 sind dabei so dimensioniert, daß die Hülsen 10 mit der gewünschten Kraft gegen die Kontaktflächen 11 und 12 drücken.

Das gesamte Lagersystem, einschließlich Bremssystem, wird am oberen und unteren Ende des Lagerspaltes 8 mit Dichtungen 14 abgedichtet und gegen Umgebungseinflüsse geschützt.

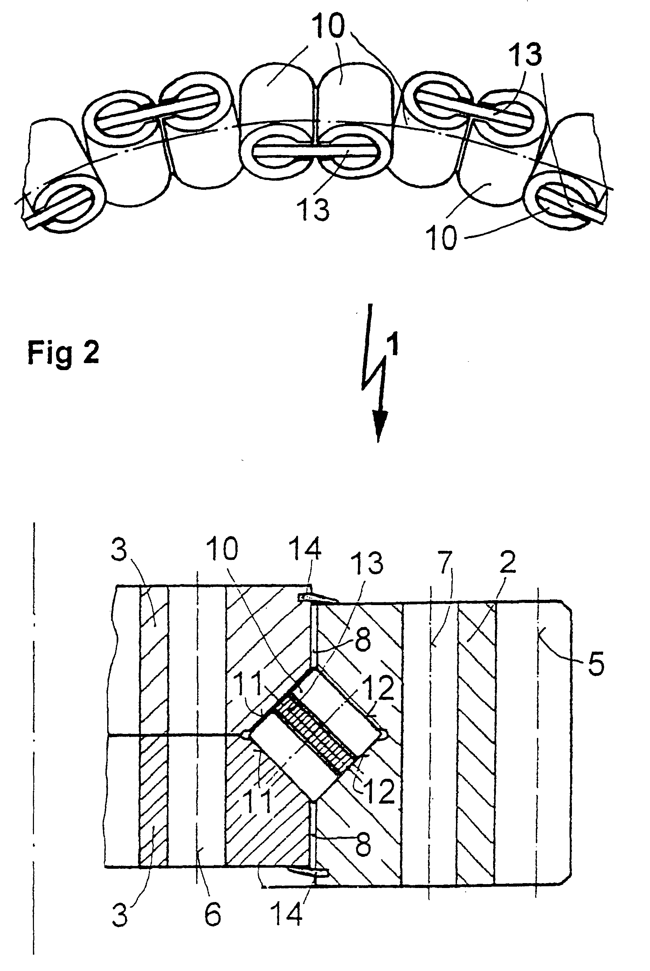

In Fig. 2 sind die Spannhülsen 10 und die Distanzhalter 13 kreuzweise angeordnet und bewirken so eine optimale Dämpfung des Systems gegen Schwingungen aus allen Richtungen. Außerdem ist es möglich, diese Version ohne Wälzkörper, d.h. als reines Gleitlager zu betreiben.

## Patentansprüche

1. Mittenfreie Drehverbindung (1) bestehend aus ein- oder mehrteilig ausgebildetem Außen- und Innenring (2, 3) sowie wenigstens einem, dazwischenliegenden, die Dämpfung und den Drehwiderstand bestimmenden Dämpfungs- und Bremssystem,
**dadurch gekennzeichnet,**
**daß** als Dämpfungs- und Bremssystem zwischen zwei jeweils mit Außen- und Innenring (2, 3) verbundene Kontaktflächen (11, 12) längsgeschlitzte kreiszylindrische Spannhülsen (10) angeordnet sind, welche mit definierter Vorspannung gegen die Kontaktflächen (11, 12) drücken und am Abrollen gehindert sind.

2. Drehverbindung (1) nach Anspruch 1, **dadurch gekennzeichnet, daß** die Spannhülsen (10) mittels Distanzhalter (13) am Abrollen auf den Kontaktflächen (11, 12) gehindert sind und ihre Anzahl durch Längenänderung der Distanzhalter (13) variierbar ist.

3. Drehverbindung (1) nach Anspruch 1 und 2, **dadurch gekennzeichnet, daß** die Spannhülsen (10) und die Distanzhalter (13) kreuzweise angeordnet sind.

## Claims

1. Centreless rotary joint (1), consisting of a one-part or multi-part outer and inner ring (2, 3) and of at least one damping and braking system located between them and determining the damping and the rotational resistance, **characterized in that** two contact surfaces (11, 12) connected in each case to the outer and the inner ring (2, 3) have arranged between them, as a damping and braking system, longitudinally slotted circular-cylindrical clamping sleeves (10) which press with defined prestress against the contact surfaces (11, 12) and are prevented from rolling.

2. Rotary joint (1) according to Claim 1, **characterized in that** the clamping sleeves (10) are prevented from rolling on the contact surfaces (11, 12) by means of spacers (13) and the number of said clamping sleeves can be varied by means of a change in length of the spacers (13).

3. Rotary joint (1) according to Claims 1 and 2, **characterized in that** the clamping sleeves (10) and the spacers (13) are arranged crosswise.

## Revendications

1. Joint tournant sans centre (1) se composant d'un anneau extérieur et d'un anneau intérieur (2, 3) réalisés d'une pièce ou en plusieurs parties, ainsi que d'au moins un système d'amortissement et de freinage intermédiaire déterminant l'amortissement et la résistance à la rotation,
**caractérisé en ce que**
des manchons de serrage (10) cylindriques circulaires fendus longitudinalement sont disposés en tant que système d'amortissement et de freinage entre deux surfaces de contact (11, 12) connectées respectivement à l'anneau extérieur et à l'anneau intérieur (2, 3), ces manchons de serrage pressant avec une précontrainte définie contre les surfaces de contact (11, 12) et étant bloqués en rotation.

2. Joint tournant (1) selon la revendication 1, **caractérisé en ce que** les manchons de serrage (10) sont bloqués en rotation sur les surfaces de contact (11, 12) au moyen d'éléments d'espacement (13) et leur nombre peut être modifié par variation de la longueur des éléments d'espacement (13).

3. Joint tournant (1) selon les revendications 1 et 2, **caractérisé en ce que** les manchons de serrage (10) et les éléments d'espacement (13) sont disposés en croix.
